# EUROPEAN PATENT APPLICATION

(11) **EP 4 722 653 A1**
(43) Date of publication of application: **08.04.2026**
(21) Application number: 24204379.2
(22) Date of filing: 02.10.2024
(51) Int. Cl.: G01C 21/34, G01C 21/00

(54) **METHOD, APPARATUS AND COMPUTER PROGRAM FOR GENERATING MAP DATA**

(71) Applicant: TomTom Navigation B.V., 1011 AC Amsterdam (NL)
(72) Inventor: Gutwenger, Carsten Walter, 1011 AC Amsterdam (NL)
(74) Representative: Swindell & Pearson Limited

(57) **Abstract**

Certain examples provide a computer-implemented method (10) of generating map data (1001) for classifying roads in a geographical region of a digital map (100), wherein the digital map comprises map data that represents segments of roads, wherein each road segment is defined at least in part by an arc between two nodes, the method comprising: determining (11) one or more points (501) for each of a plurality of areas (201) of the digital map, wherein each of the plurality of areas comprises a plurality of nodes and arcs (301), and wherein the determination comprises selecting one or more of the plurality of nodes and/or one or more arc positions of the respective area as the one or more points; determining (12) one or more origin points (601), wherein the determination comprises selecting the one or more points as the one or more origin points; determining (13), for each of the one or more origin points, a set of destination points (701), wherein the determination comprises: determining a set of points, wherein each point of the set is between first and second threshold distances from the respective origin point, and defining the determined set of points as the set of destination points for the respective origin point; calculating (14), for each of the one or more origin points, a set of minimum cost paths (801) between the respective origin point and each destination point of the set of destination points for the respective origin point; determining (15) a set of arcs (901), wherein each arc of the set of arcs: forms a part of at least one minimum cost path of one of the sets of minimum cost paths, is at a distance greater than a third threshold distance from the respective origin point and the respective destination point of the at least one minimum cost path; and generating (16) map data (1001) for classifying roads, wherein the generation comprises assigning a road classification parameter value (RCi) to one or more road segments, wherein the assignment of the road classification parameter value is based at least in part on a determination whether one or more arcs representing the one or more road segments are included in the set of arcs.

## Description

### TECHNOLOGICAL FIELD

Examples of the present disclosure relate to generating map data, in particular a method, an apparatus and a computer program for generating map data. Some examples, though without prejudice to the foregoing, relate to generating map data for use in road classification and performing route calculations.

### BACKGROUND

Conventional map data, i.e. for a digital map of a geographic region comprising a road network, may comprise a road classification/road class for each road which is indicative of an administrative hierarchy of the road. For example, conventionally, a road may be categorised as one of the following administrative classes:
motorways/freeways,
primary roads/arterial roads,
collector roads, and
local roads.

Conventional route search algorithms may use such an administrative hierarchy based road classification/road class for speeding up a route search/calculation, particularly for long distance routes. In this regard, conventionally, a complete road network (i.e. map data for all roads, including local/less administratively important roads) is only used for a part of a route search/calculation that near an origin and near a destination of a planned route/journey. For a part of the route search/calculation that is far from the origin and destination, only a sparse network of roads of a higher administrative importance are used/considered. Using just a sparse network of administratively important roads, rather than the complete road network, may enable faster route calculation for the portion of the route far from the origin and far from destination.

However, administrative hierarchy based road classification/road classes may be suboptimal for route search/calculation. In this regard, using administrative hierarchy based road classification/road classes for route calculation can result in a calculated route that may not actually be the most optimal route between an origin and a destination.

In some circumstances it can be desirable to generate improved map data for classifying roads, wherein the road classification may be used in calculating/searching for routes through a road network. In some circumstances it can be desirable to improve the classification of roads for use in a route calculation/search, in this regard it can be desirable to provide map data that provides dedicated information for a road about the importance of the road for a route search. In some circumstances it can be desirable to generate map data indicative a level of importance of a road for a route calculation/search, e.g. a routing importance parameter for the road or a routing class for the road. Such a routing importance parameter/routing class for the road can then be taken into account when performing a route calculation/search through a network of roads, for instance to as to selectively discount/filter out roads having a low routing importance parameter value for at least a part of a planned route from an origin to a destination (e.g. a part of the route remote from each of the origin and destination) - thereby enabling more efficient route calculation/searches.

Conventional methods for generating map data are not always optimal. Conventional methods for generating map data may need to be manually generated and maintained, or may be computationally intensive to generate and maintain - particularly where the map data represents/covers a large geographical region (for example such as one or more countries or an entire continent).

It is useful to provide an improved method, apparatus and computer program for the generation of map data. It is useful to generate map data for classifying a road. It is useful to generate map data indicative of an improved/alternative type of road class.

Various examples of the present disclosure seek to address such issues. Various examples of the present disclosure seek to improve the classification of roads for use in route calculations/searches to enable an efficient calculation of a route that is an actual most optimal route, and enable such a route to be calculated in a fast computation time.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

The scope of protection sought for various embodiments of the invention is set out by the claims.

According to various, but not necessarily all, examples of the disclosure there are provided examples as claimed in the appended claims. Any examples and features described in this specification that do not fall under the scope of the independent claims are to be interpreted as examples useful for understanding various embodiments of the invention.

According to various, but not necessarily all, examples of the disclosure there is provided a computer-implemented method of generating map data, accessible at a navigation device, for classifying roads in a geographical region of a digital map, wherein the digital map comprises map data that represents segments of roads, wherein each road segment is defined at least in part by an arc between two nodes, the method comprising:
determining one or more points for each of a plurality of areas of the digital map, wherein each of the plurality of areas comprises a plurality of nodes and a plurality of arcs, and wherein the determination comprises selecting one or more of the plurality of nodes and/or one or more positions on one or more arcs of the plurality of arcs of each of the plurality of areas of the digital map as the one or more points;
determining one or more origin points, wherein the determination comprises selecting the one or more points as the one or more origin points;
determining, for each origin point, a set of destination points, wherein the determination comprises:
   determining a set of the one or more points, wherein each point of the set is between first and second threshold distances from the respective origin point, and
   defining the determined set of points as the set of destination points for the respective origin point;
calculating, for each origin point, a set of minimum cost paths between the respective origin point and each destination point of the set of destination points for the respective origin point;
determining a set of arcs, wherein each arc of the set of arcs:
   forms a part of at least one minimum cost path of one of the sets of minimum cost paths, and
   is at a distance greater than a third threshold distance from the respective origin point and the respective destination point of the at least one minimum cost path, and/or is at a distance greater than a fourth threshold distance from the respective destination point and the respective origin point of the at least one minimum cost path; and
generating map data for classifying roads, wherein the generation comprises assigning a road classification parameter value to one or more road segments, wherein the assignment of the road classification parameter value is based at least in part on a determination whether one or more arcs representing the one or more road segments are included in the set of arcs.

According to at least some examples of the disclosure there is provided an apparatus comprising means for performing the above-mentioned method.

According to various, but not necessarily all, examples of the disclosure there is provided a module, chipset, circuitry, device and/or system comprising means for performing the above-mentioned method.

According to various, but not necessarily all, examples of the disclosure there is provided a computer program comprising instructions, which when executed by an apparatus, cause the apparatus to perform the above-mentioned method.

According to various, but not necessarily all, examples of the disclosure there is provided an apparatus comprising:
at least one processor; and
at least one memory storing instructions that, when executed by the at least one processor, cause the apparatus at least to perform the above-mentioned method.

According to various, but not necessarily all, examples of the disclosure there is provided a non-transitory computer readable medium encoded with instructions that, when executed by at least one processor, causes the above-mentioned method to be performed.

The following portion of this 'Brief Summary' section describes various features that can be features of any of the examples described in the foregoing portion of the 'Brief Summary' section mutatis mutandis. The description of a function should additionally be considered to also disclose any means suitable for performing that function, or any instructions stored in at least one memory that, when executed by at least one processor, cause an apparatus to perform that function.

In some but not necessarily all examples, determining the one or more points for each of the plurality of areas comprises determining one or more connected components of nodes and arcs within the respective area.

In some but not necessarily all examples, the selection of the one or more of the plurality of nodes and/or one or more positions on one or more arcs of the plurality of arcs as the one or more points of each of the plurality of areas comprises selecting one or more nodes and/or one or more positions on one or more arcs of at least one of the one or more connected components of the respective area as the one or more points.

In some but not necessarily all examples, determining the one or more points for each area is based at least in part on at least one of the following:
a number of connected components within the respective area;
a number of nodes and arcs within a connected component of the respective area;
an attribute of the nodes and/or arcs within a connected component of the respective area; and
a predetermined threshold number of points per area.

In some but not necessarily all examples, determining the one or more points for each area comprises selecting one or more nodes of the respective area that are substantially evenly distributed through the respective area.

In some but not necessarily all examples, the plurality of areas of the digital map comprises at least one the following:
a plurality of areas into which the geographical region of the digital map is partitioned;
a plurality of substantially uniform areas;
a plurality of areas of substantially the same size; and
a plurality of tiles.

In some but not necessarily all examples, each of the plurality of areas has a first size, and the method further comprises performing, for each of one or more sizes of other areas whose size is different to the first size, the following:
determining one or more other points for each of a plurality of other areas of the digital map, wherein each of the plurality of other areas has a size different to the first size and comprises another plurality of nodes and arcs, and wherein the determination comprises selecting one or more of the another plurality of nodes of the respective other area as the one or more other points;
determining one or more other origin points, wherein the determination comprises selecting the one or more other points as the one or more other origin points;
determining, for each of the one or more other origin points, a set of other destination points, wherein the determination comprises:
   determining a set of other points, wherein each other point of the set is between two predetermined distances from the respective other origin point, and
   defining the determined set of other points as the set of other destination
   points for the respective other origin point;
calculating, for each of the one or more other origin points, a set of other minimum cost paths between the respective other origin point and each other destination point of the respective set of other destination points;
determining another set of arcs or nodes, wherein each arc or node of the another set of arcs or nodes:
   forms a part of at least one other minimum cost path of the sets of other minimum cost paths,
   is greater than a predetermined distance from the respective other origin point and the respective other destination point of the at least one other minimum cost path; and
generating map data for classifying roads, wherein the generation comprises assigning a road classification parameter value to one or more road segments based at least in part on a determination whether one or more arcs representing the road segments are included in the other set of arcs.

In some but not necessarily all examples, the calculating, for each of the one or more other origin points, a set of other minimum cost paths comprises: filtering out one or more road segments or arcs, wherein the filtering is based at least in part on a road classification parameter value assigned to the road segments or arcs.

In some but not necessarily all examples, the method further comprises performing one or more iterations of the steps of the preceding two paragraphs for respective one or more different sizes of areas of the digital map.

In some but not necessarily all examples, the road classification parameter is at least one of the following:
indicative of an importance metric of a road for calculating route;
an attribute for a road for use with a route calculation algorithm;
an attribute for a road for use in determining whether the road should be used in at least part of a route calculation; and
a road class.

In some but not necessarily all examples, the method further comprises:
determining a stretch of road that extends between a first road intersection and a second road intersection;
determining a road classification parameter value assigned to at least a part of the stretch of road; and
assigning the determined road classification parameter to the entire stretch of road.

In some but not necessarily all examples, the method further comprises:
determining a road intersection between:
a first stretch of road having a first road classification parameter, and
a second stretch of road having a second road classification parameter; and assigning the road intersection a classification parameter, wherein the assigned classification parameter is based at least in part on the first and second classification parameters.

In some but not necessarily all examples, the method further comprises: at least one of:
providing the map data for classifying roads to a navigation system; and
using the map data for classifying roads by a navigation system for route calculations.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION OF THE DRAWINGS

Some examples will now be described with reference to the accompanying drawings in which:
Fig. 1 schematically shows an example of a method according to the present disclosure;
Fig. 2 shows an example of a part of digital map for use with examples of the present disclosure;
Fig. 3 shows an example of a plurality of areas/tiles of the part of the digital map of Fig. 1;
Fig. 4 schematically shows an examples of connected components within a map tile;
Fig. 5 schematically shows an example of tile nodes of a map tile;
Fig. 6 schematically shows a further example of tile nodes of a map tile;
Fig. 7 schematically shows a yet further example of tile nodes of a map tile;
Fig. 8 schematically shows an example of determining a set of destination points for an origin point;
Fig. 9 schematically shows an example of a minimum cost path between an origin point and a destination point;
Fig. 10 schematically shows the minimum cost path of Fig. 9;
Fig. 11 schematically shows an example of an apparatus according to the present disclosure; and
Fig. 12 schematically shows an example of a computer program according to the present disclosure.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the drawings (and description) a similar feature may be referenced by the same three-digit number. In the drawings (and description), an optional subscript to the three-digit number can be used to differentiate different instances of similar features. Therefore, a three-digit number without a subscript can be used as a generic reference and the three-digit number with a subscript can be used as a specific reference. A subscript can comprise a single digit that labels different instances. A subscript can comprise two digits including a first digit that labels a group of instances and a second digit that labels different instances in the group.

### DETAILED DESCRIPTION

As will be discussed and set out in further detail below, rather than classify roads based on an administrative hierarchy (wherein the road's administrative class may be dictated by the road's owner or administrator such as a local highway authority), instead examples of the present disclosure classify roads based on a (heuristically evaluated) importance of the road/road segment for a route search. Such a classification is referred to herein as a routing class "RC".

In some examples, a road/road segment may be assigned one of 5 routing class values, i.e. one of: RC₀, RC₁, RC₂, RC₃, RC₄, wherein the lower the Routing Class (e.g. RC₀) the more important the road/road segment is for routing purposes, and the higher the Routing Class (e.g. RC₄) the less important the road/road segment is for routing purposes.

By way of a broad overview, various examples of the present disclosure provide a heuristic approach for efficiently calculating routing classes for roads/road segments.

The efficiency of the routing classes calculation may enable the calculation of routing classes to be done for all roads/road segments on a world-sized road network. In this regard, the heuristic selection of origin points and destination points used for performing route searches allows for a reduction in the number of required route searches and makes it possible to calculate the routing classes on a world-sized map.

The approach is based on calculating fastest routes in a structured manner, such that an internal sub-path of such routes (i.e. a part of the calculated route that is further away from both origin and destination of the calculated route) can be used to derive a minimum routing importance level for the corresponding roads/road segments along the sub-path. Advantageously, such use of fastest route calculations may enable traffic restrictions, as well as estimated speeds, for roads/road segments to be considered properly for the roads/road segments. The outcome of these calculations is a routing class value for each road/road segment that can be used, when performing route search calculations to plan a route, to ignore certain roads/road segments based on: a distance to the route's origin and destination, as well as the road/road segment's routing class.

In this regard, the routing class calculated via examples of the present disclosure effectively provides a parameter/attribute for a road/road segment that can be used by a route search algorithm in deciding whether or not to consider the road when calculating a route, thereby effectively filtering/reducing the pool of candidate roads/road segments to consider in a route search, and thereby enabling a more efficient (i.e. computationally less intensive) route search calculation.

Routing classes need to be accurate in the sense that using them with a route search algorithm to ignore certain roads does not lead to suboptimal results that differ much from the optimal solution. Since routing classes affect the route search for very long routes (multiple 100 kms) they cannot be determined by just looking at a small local area. A more global approach is required, and since a road network may change frequently, the routing classes may need to be recomputed on a regular basis. Therefore, the efficiency of the performance of the routing class calculation may enable more frequent recomputing of routing classes on a world-sized map.

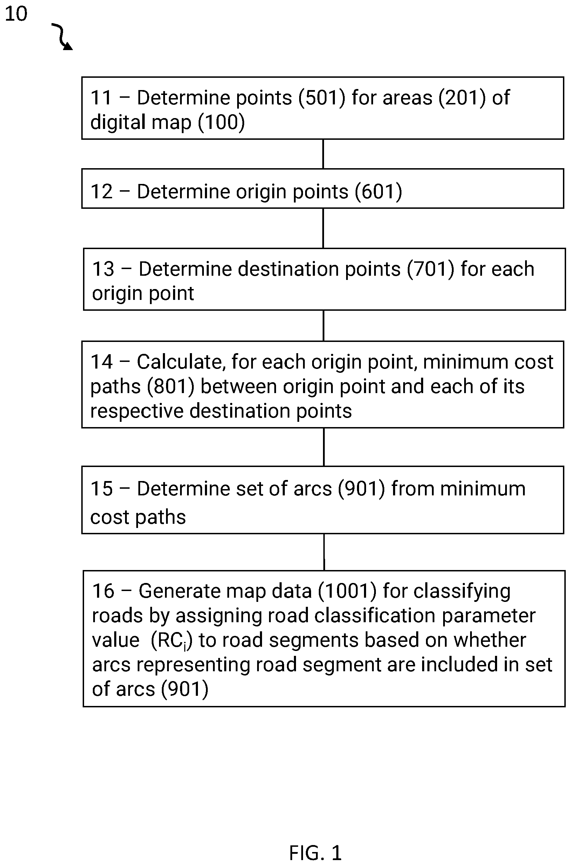

Figure 1 schematically illustrates a method 10 (which may be computer-implemented) of generating map data, namely a routing class value RCⱼ, for classifying roads in a geographical region of a digital map.

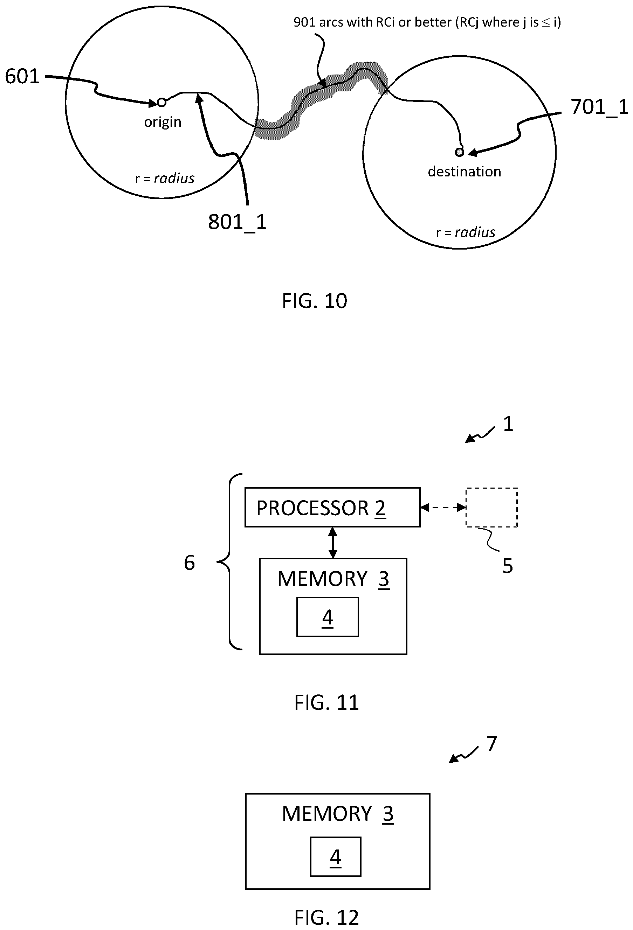

The component blocks of Figure 1 are functional and the functions described can be performed by a single physical entity (such as is described with reference to Figure 11). The functions described can also be implemented by a computer program (such as is described with reference to Figure 12).

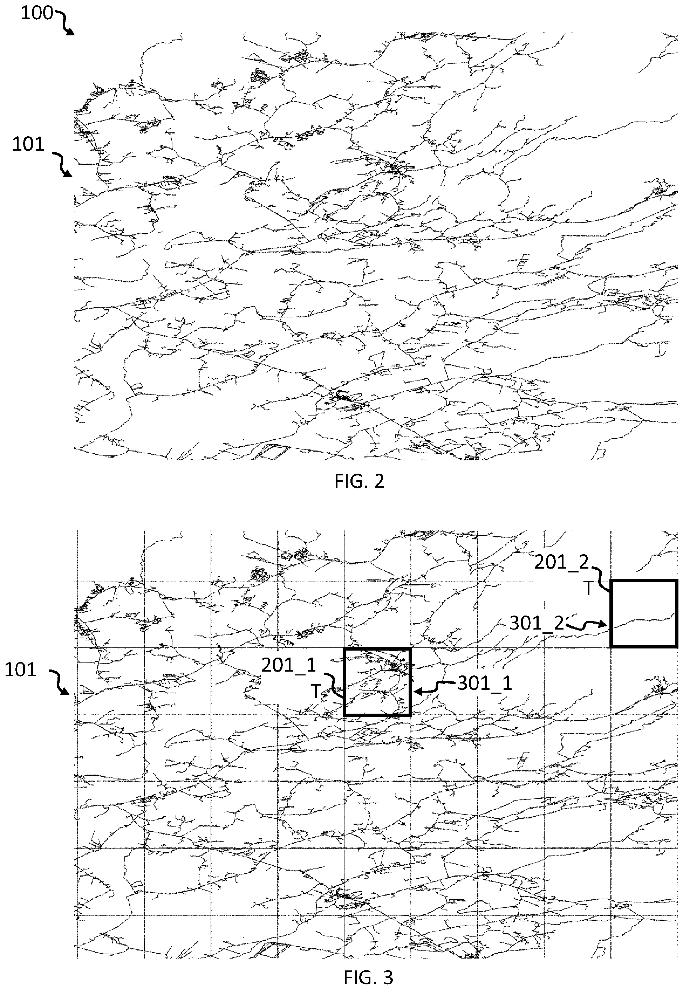

The method of Figure 1 will be described with reference to Figures 2 to 9.

Figure 2 illustrates an example of a portion 101 of a base digital map 100. The digital map comprises map data representative of segments of navigable elements of a network of navigable elements in a geographical region. The digital map represents segments of navigable elements via a graph comprising arcs and nodes. Each segment of a navigable element is defined by an arc (which may also be referred as an edge, link or line) between two nodes.

In the examples of the present disclosure described below, the segments of navigable elements are segments of roads and the network is a road network. However, it is to be appreciated that in other examples, the navigable element segments could be segments of a: foot path, hiking trail, cycle path, canal, tow path, river, railway line, or the like.

The geographical region covered by the digital map may correspond to: the world (i.e. substantially the whole world, or at least the main populated continents/countries thereof), one or more continents, or one or more countries. In this regard, the digital map may effectively represent segments of navigable elements on a world-sized network of navigable elements.

The road network is represented via the digital map as a graph consisting of arcs and nodes. In this regard, in the digital map, each road segment is defined at least in part by an arc (which may also be referred as an edge, link or line) between two nodes.

The digital map may be partitioned or partitionable into a plurality of areas, such as a plurality of map tiles or grids, each having a particular size/dimension (wherein the size/dimension of each area/tile may be related to a particular map level. In some examples, the tiles of map data may be tiles of a Navigation Data Standard "NDS" map. In some examples, the tiles of map data at a particular map level may be a particular level of tile of an NDS map.

As will be discussed below, the calculation of routing classes for roads of a road network represented by the digital map is effectively carried out by performing several iterations - for instance 4 iterations (represented as i = 3, 2, 1, 0) of the method 10, wherein:
i = 3 for the first iteration,
i = 2 for the second iteration,
i = 1 for the third iteration, and
i = 0 for the fourth iteration.

Each iteration determines the next routing class.

In the particular example that will be described below, each road segments is assigned one out of a set of 5 possible routing class values, namely routing class values: RC₀, RC₁, RC₂, RC₃ and RC₄. The lower the routing class (e.g. RC₀) the more important the road/road segment is for routing purposes, and the higher the Routing Class (e.g. RC₄) the less important the road/road segment is for routing purposes. It is to be appreciated that, in other examples, the number of possible RC values in a set of possible routing class values could be fewer in number (e.g. 4 possible RC values) or greater in number (e.g. 6 possible RC values).

After iteration i, a set of arcs of the digital map with routing classes RCⱼ (with j > i) are computed, and all the remaining arcs have routing class RCₖ (with k ≤ i). Roads or parts thereof, i.e. road segments, that are represented by arcs with a routing classes RCⱼ are themselves assigned/given a routing classes RCⱼ. Likewise, roads/parts thereof/road segments that are represented by arcs with routing classes RCₖ are assigned/given a routing class RCₖ.

For instance, after the first iteration, i=3, arcs with routing class RC_{>3} are computed (it being appreciated that RC_{>3} is effectively the same as RC₄ since the maximum RC value is RC₄), and the remaining arcs are determined to have a routing class RC_{≤3}. Then, after the second iteration, i=2, arcs with routing class RC₃ are computed, with the remaining arcs being determined to have a routing class RC_{≤2}. After the third iteration, i=1, arcs with routing class RC₂ are computed, with the remaining arcs being determined to have a routing class RC_{≤1}. Finally, after the fourth iteration, i=0, arcs with routing class RC₁ are computed, with the remaining arcs being determined to have a routing class RC_{≤0} (it being appreciated that RC_{≤0} is effectively the same as RC₀ since the minimum RC value is RC₀).

Each iteration, i, consists of three phases:
(a) determining a set of points, also referred to herein as "stops" (which are a particular set of nodes of the digital map that are variously selected to serve as origin points and destination points of phase b's route calculations)
(b) calculating one-to-many routes and determining which arcs need to have at least routing class RCᵢ based on selected internal parts of the calculated routes, and
(c) performing optional postprocessing.

There now follows a discussion of a first iteration of the method (i.e. wherein i = 3) for computing particular roads/road segments of a digital map that have the highest routing class RC₄ (and hence are least important for routing), and the remaining roads that are deemed to have a routing class RC_{≤3}.

The base digital map 100 is partitionable into a plurality of areas, which can also be referred to as tiles. The areas/tiles can be substantially uniform, i.e. of substantially the same shape and the same size. The size/dimension of each area/tile of the plurality of areas/tiles can be adjusted/selected as required (such as based on a particular map layer of the base digital map). Each area/tile comprises set of nodes and arcs that represents the roads/road segments within the respective area/tile.

The base digital map 100 may be partitioned into a set 201 of a plurality of tiles T (also referred to as a plurality of areas 201_n) of a first size/dimension. Such tiles may correspond to map tiles of map data at a particular map layer. By way of a non-limiting example, the set of tiles may be level 13 NDS tiles.

Figure 3 shows the portion 101 of the digital map 100 of Figure 2 partitioned into a plurality of tiles 201. In the example shown, the tiles are rectangular, but it is to be appreciated that other tiling schemes and shapes could be used for separating out/partitioning the digital map . Each of the tiles has a particular/first size. By way of a non-limiting example, in the first iteration (i=3) of the method, the tiles may equate to level 13 NDS tiles, i.e. tiles of a level 13 NDS map.

In figure 3, two tiles are highlighted:
a first tile 201 _1 which has a first set nodes and arcs 301 _1 contained therein that represent roads/road segments within the first tile, and
a second tile 201 _2 which has a second set nodes and arcs 301 _1 contained therein that represent roads/road segments within the second tile.

In block 11 of the method 10 of figure 1, one or more points 501 are determined. In this regard, for each tile of the set of tiles of the digital map, one or more points 501 are determined (such points 501 may also be referred to herein as "stops") such that, in effect, a global set of points/stops are determined for the digital map (i.e. all of the points/stops for all of the tiles).

The determination of the points/stops comprises, for each tile, selecting one or more nodes 301 of the respective tile, and/or one or more positions on one or more arcs of the tile (hereinafter referred to as "arc positions" of the tile) as the one or more points/stops for the respective tile. In this regard, one or more of the nodes of a tile, and/or one or more arc positions of the tile, are selected as the one of more points/stops for the tile.

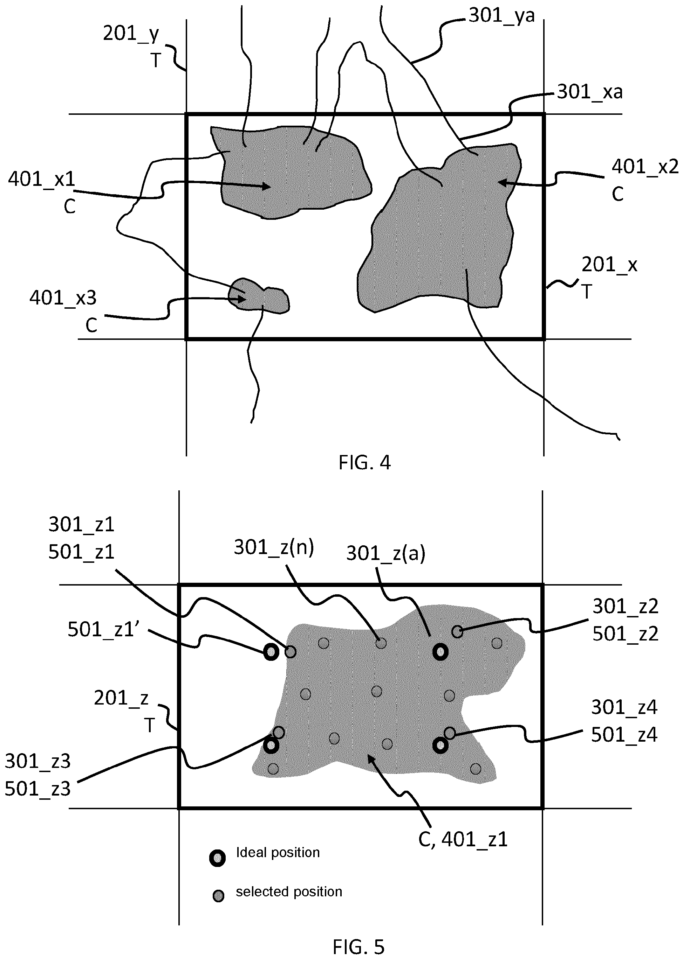

Figure 4 schematical illustrates a tile 201 _x "T" of map data with 3 connected components 401 "C" of arcs and nodes within the tile. Such connected components may correspond to regions/clusters of nodes and arcs within a tile that are connected to each other but are not connected to any other nodes and arcs within the tile, i.e. the connected components are disjoint sets of arcs and nodes within the tile.

Herein, the term "connected components" for a tile is used similar to that of its use in graph theory - namely related to a connected subgraph of a graph that is not part of any larger connected subgraph of the graph - wherein the "graph" corresponds just to the nodes and arcs within an individual tile. In this regard, all nodes (and attached edges) not in the tile are removed. It is to be appreciated, however, that the connected components within a tile would usually be connected to other/neighbouring tiles when considering the whole road network.

In some examples, the determining of the points/stops for each tile may comprise:
determining one or more connected components 401 of nodes and arcs within the respective tile, and
selecting one or more nodes 501 of at least one of the one or more connected component 401 as the one or more points/stops 501.

In the example shown in figure 4, there are three clusters/regions of connected components "C" - namely: 401_x1 to 401_x3 - that do not connect to one another within the tile (but which may connect to other arcs and nodes of neighbouring tiles as shown via arcs 301_ya of neighbouring tile 201_y).

In the example of figure 4, individual arcs and nodes of each connected component C are not shown. However, arcs of the tile that connect to arcs of a neighbouring tile are shown, e.g. arc 301_xa of the tile 201 _x that connects to arc 310_ya of neighbouring tile 201 _y.

Figure 5 schematically illustrates another tile "T" 201 _z of map data that has a single connected component 401_z1 of arcs and nodes within the tile that do not connect to any other arcs and nodes inside the tile.

Figure 5 shows individual arcs and nodes 301_z(a) and 301_z(n) of the connected component 401_z1 of the tile 201_z. However, arcs of the tile 201 _z that connect to arcs of neighbouring tiles are not shown. Figure 5 also shows various nodes of the connected component that have been selected to be points/stops. In this regard, nodes 301 _z1 to 301 _z4 have been selected to be points/stops 501 _z1 to 501 _z4. As will be discussed below, the selection of particular node to be a point/stop may be based on selecting a node that is closest to a virtual point/stop (e.g. selection of node 301 _z1 to be a point/stop 501 _z1 since node 301 _z1 is, out of all of the nodes 301_z(n), the closest to virtual point/stop 501_1').

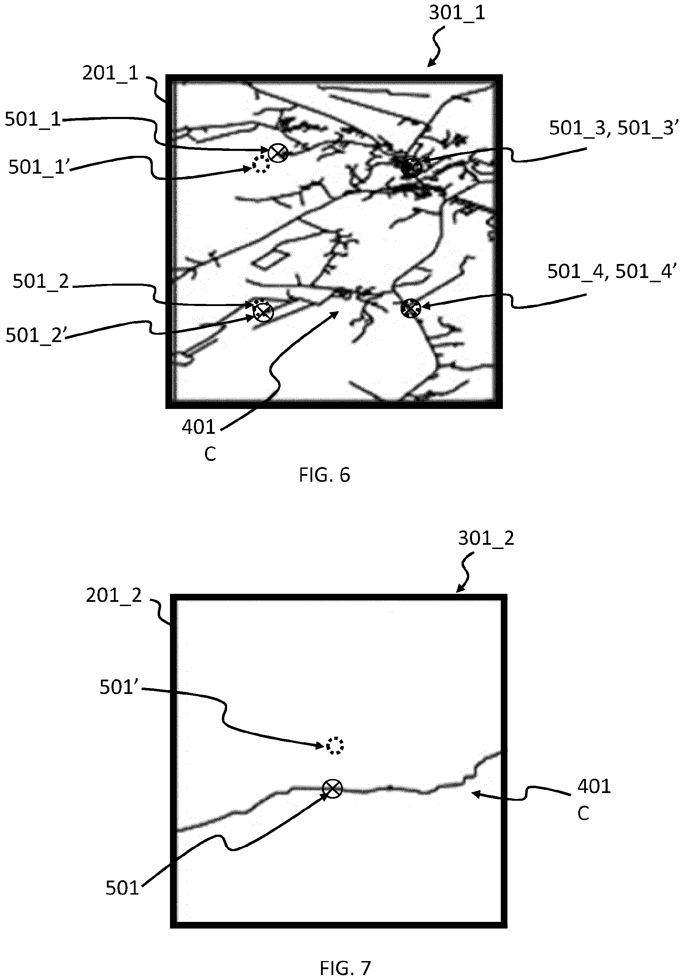

The selection of nodes of a tile as points/stops may be as follows. For each tile T (e.g. tile 201 _z of figure 5), a subgraph is defined consisting of arcs that are within a bounding box of T and connected components C are computed. For each such connected component C, a number of points/stops may be created/defined based on the following criteria:
1. If tile *T* has many connected components (i.e. above a threshold number), but it is determined that: one of the connected components C is very small (i.e. below a threshold size) or that it contains no important roads (i.e. roads having an administrative road class of a threshold level indicative of the road being an important road such as a motorway), then no points/stops are created/allocated for *C*.
2. Otherwise, a determination is made as to how many stops are desired/required to be created within a connected component. For example, if a tile *T* has only a few connected components (i.e. below a threshold number) or a connected component contains many and important arcs, four points/stops may be created/defined that are evenly spread over T (as shown in figures 5 and 6). Else, just a single point/stop may be created/defined near a centre of the T (as shown in figure 7) .

In this regard, the determination of the one or more points/stops for each tile may be based on the at least one of the following:
a number of connected components within the tile;
a number of nodes and arcs within a connected component of the tile;
an attribute (e.g. administrative road class) of the nodes and/or arcs within a connected component of the respective tile (such as if the node/arc is associated with a particular administrative road class indicating that the node/arc is a part of an important road); and
a predetermined threshold number (e.g. a maximum of 4 points/stops for each tile). Limiting the number of points/stops per tile reduces the total number of points/stops which may reduce the amount of computation that would be required in the calculations of block 14.

Figure 6 shows tile 201_1 of figure 3. This tile can be considered as effectively comprising a single large connected component (or a connected component that contains many and/or important arcs). As such, four points/stops 501_1 to 501_4 are created/allocated for the tile/connected component. In this regard, 4 virtual points/stops 501_1' to 501_4' are defined and located within the tile such that they are evenly distributed within the tile - in this case effectively positioned in the centre of each quadrant of the tile. Each of the points/stops 501_1 to 501_4 are then defined as the node of the tile that is closest to each respective virtual points/stops 501_1' to 501_4'.

Figure 7 shows tile 201_2 of figure 3. This tile can be considered as effectively comprising a single small connected component 401 that contains few and/or unimportant arcs. As such, only a single point/stop 501 is created/allocated for the tile/connected component.

In this regard, a single virtual point/stop 501 is defined in the centre of the tile, and the node of the tile that is closest to the virtual point/stop is defined as the point/stop 501 for the tile.

In block 12, one or more origin points 601 are determined. In this regard, the one or more of points/stops 501 of each tile may be selected as the one or more origin points. In this regard, the set of origin points 601 for the digital map corresponds to the global set of points/stops 501 for the digital map (i.e. all of the points/stops of all of the tiles).

In block 13, for each of the one or more origin points 601, a set of one or more destination points 701 are determined.

The destination points need to be chosen in such a way that:
(a) they are not too far away from the origin point (as this would unnecessarily increase the runtime of the one-to-many search of block 14 discussed below) and
(b) not too close to the origin (as otherwise the routes would not contain an interior path that can be used to identify roads of higher importance for routing).

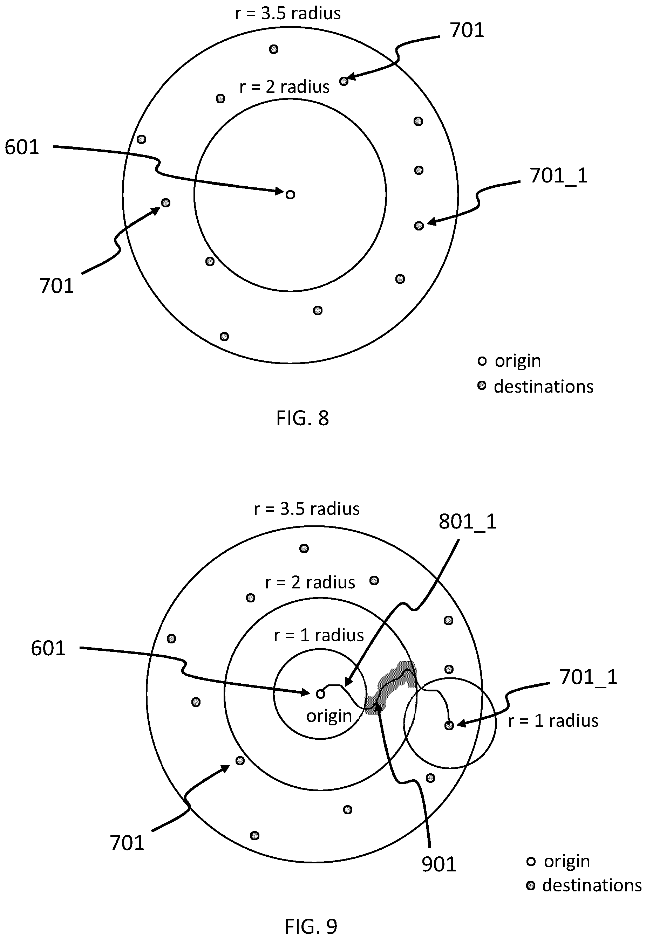

As shown with respect to the example of figure 8, this may be achieved by selecting the destination points for an origin point 601 in the following manner.

For each origin point, a set of points/stops (i.e. a subset of the global set of points/stops 501 for the digital map) is determined, wherein each point/stop of the set is between a first threshold distance and a second threshold distance from the respective origin point. Such a set of points/stops for the respective origin point is defined as the set of destination points 701 for the respective origin point.

In the example of Figure 8, the first threshold distance is a distance of 2 radii, and the second threshold distance is a distance of 3 radii, wherein each radius is a distance threshold used by a route search algorithm to filter out arcs by routing class. In this regard, any arc further away than the radius from both the origin point and the destination point needs to have RCj with j ≤ i, where i is a current iteration (wherein, for the first iteration, i = 3).

The radius size is a tunable parameter (the larger the radius the sparser the levels, but also the longer the routes where the filtering will be effective). It is preferable to keep the radius size aligned with the filtering distance threshold used by the route search algorithm.

In the example of FIG. 8, the distances are measured/defined with regards to a line with particular radius. In other examples, the distances are measured/defined in an alternative manner. For example, in some examples the distances could be defined as lengths along a route/path.

A set of points/stops is selected from the global list of points/stops (calculated in block 11) that have a distance from the origin point between 2 radii (2r) and 3.5 radii (3.5r).

By way of a non-limiting example, for the first iteration of the method 10 (i.e. i=3), the first threshold distance may be 2 radii, and the second threshold distance may 3 radii, wherein each radius = 3.125 km. In this regard, for the first iteration (i.e. i=3), a set of points/stops, which are between 6.25 km and 9.375 km from an origin point, are selected as the set of destination points for the origin point.

In block 14, for each origin point, a set of minimum cost paths 801 are calculated between the respective origin point and each destination point of the origin point's set of destination points. In this regard, a set of minimum cost paths/routes through the road network of the digital map are calculated between an origin point and each of its destination points.

A set of workers (i.e. a set of threads that execute a certain function with some given parameters) may be tasked to perform such one-to-many route searches to determine the set of minimum cost paths for each origin point. Each worker may take a next point from a work queue and use it as an origin for the one-to-many route calculation. Then the worker may determine a set of destination stops for the particular origin point and then perform a one-to-many route calculation based on the origin stop and its set of destination stops. In order to obtain a best possible parallelization and maintain a work queue of stops, as many threads may be created as CPUs available.

Each of these minimum cost paths/routes are then used to determine arcs that should have RCi or better (i.e. RCⱼ where j is ≤ i). Such arcs may be defined as the arcs of the minimum cost paths/routes whose head or tail has a distance of at least radius to the origin point or destination point - as discussed below with respect to block 15 and shown in figures 9 and 10.

In block 15, a set of arcs 901 is determined, wherein each arc of the set of arcs:
a) forms a part of at least one minimum cost path of one of the sets of minimum cost paths (calculated in block 14), and
b) is at a distance greater than a third threshold distance from the respective origin point and the respective destination point of the at least one minimum cost path, and/or is at a distance greater than a fourth threshold distance from the respective destination point and the respective origin point of the at least one minimum cost path.

Figures 9 and 10 show an example of one minimum cost path 801_1 between an origin point 601 and one of the origin point's destination points, namely destination point 701_1. In this example, the third threshold distance is a distance of 1 radius (i.e. one unit distance threshold used by a route search algorithm to filter out arcs by routing class as discussed above). The set of arcs 901 are effectively the set of arcs that form/define the middle portion of the minimum cost path 801_1 which is greater than 1 radius away from each of the origin and destination points.

By way of a non-limiting example, for the first iteration of the method 10 (i.e. i=3), the third threshold distance may be 1 radius wherein the radius = 3.125 km.

In block 16, map data 1001 for classifying roads is generated. The generated map data may be accessible at a navigation device. The generation comprises assigning a road classification parameter value, i.e. a routing class value - RC value, to one or more road segments of the digital map, wherein the assignment of the road classification parameter value is based at least in part on a determination whether one or more arcs representing the one or more road segments are included in the set of arcs 901 that were determined in block 15.

In this regard, road segments that are determined not to be represented by the determined set of arcs may be deemed to have, and may be assigned, a first road classification parameter value. For example, for the first iteration (i=3), such road segments may be deemed to have and may be assigned a road classification parameter value = 4, i.e. RCᵢ where i = 4 (namely RC₄). Whereas, road segments that are determined to be represented by the determined set of arcs may be deemed to have, and may be assigned, another road classification parameter value. For example, for the first iteration (i=3), such road segments may be deemed to have and may be assigned a road classification parameter value ≤ 3, i.e. RCⱼ where j ≤3 (namely RC_{≤3}).

The road classification parameter may thereby be at least one of the following:
indicative of an importance metric of a road for calculating route;
an attribute for a road for use with a route calculation algorithm;
an attribute for a road a road for use in determining whether the road should be used in at least part of a route calculation; and
a routing class.

References to performing an action for "all" tiles or "each of a plurality of ..." are to be interpreted as performing the action for "substantially all tiles" or "substantially each of a plurality of ...". In this regard, it is to be appreciated that a digital map may comprise some missing tiles and/or tiles with incomplete/missing map data or non-up-to-date map data, such that it might not be possible to perform actions on "all tiles".

The method 10 has primarily been described above with regards to performing a first iteration (i=3) of the method, wherein:
the base digital map is partitioned into a first set of tiles each having a first size (e.g.
corresponding to map tiles of a level 13 NDS map), and
the radius (used to determine the first, second and third thresholds) is 3.125 km in order to determine:
arcs of the base digital map that have RCⱼ where j>i (i.e. RC₄ where RCₘₐₓ is RC₄) and
arcs of the base digital map that have RC_{≤i} (i.e. RC_{<3}).

Further iterations of the method may be performed, to determine arcs that have: RC₃, RC₂, RC₁, and RC₀.

For instance, a second iteration (i=2) of the method can be performed wherein:
the base digital map is partitioned into another/second set of tiles each having another/second size (e.g. corresponding to map tiles of a level 11 NDS map) and
the radius (used to determine the first, second and third thresholds) has another size, e.g. 4 x 3.125 km = 12.5 km
in order to determine:
arcs of the base digital map that have RCⱼ where j>i (i.e. RC_{>3} based on which it is possible to determine arcs having RC₃ based on knowledge, from the first iteration, of which of the RC_{>3} arcs are also RC₄ arcs and hence the remaining arcs are RC₃ arcs), and
arcs of the base digital map that have RC_{≤i} (i.e. RC_{<3}).

In this regard, in the second iteration of the method, the method 10 could effectively be repeated as follows.

In block 11', for each tile of the second set of tiles (wherein each tiles has a second size different, e.g. larger, than the first size of the tiles of the first iteration), one or more other points/stops 501' are determined, such that, in effect, a global set of other points/stops are determined for the digital map.

In block 12', one or more other origin points 601' are determined from the one or more other points/stops 501'.

In block 13', for each of the one or more other origin points 601', a set of one or more other destination points 701' are determined, wherein the set of one or more other destination points 701' is defined by selecting other points (from the set of other points determined in block 11') that are between a first threshold distance and a second threshold distance from the respective other origin point. The first threshold distance may be 2 radii, i.e. 2 x 12.5 km = 25 km, and the second threshold distance may be 3.5 radii, i.e. 3.5 x 12.5 km = 43.75 km.

In block 14', for each other origin point 601', a set of other minimum cost paths 801' are calculated between the respective other origin point 601' and each other destination point 701' of the other origin point's set of other destination points. In the calculation of the other minimum cost paths, road segments having RC₄ may be filtered out.

In block 15', a set of other arcs 901' is determined, wherein each arc of the set of arcs:
a) forms a part of at least one other minimum cost path 801' of one of the sets of other minimum cost paths (calculated in block 14'), and
b) is at a distance greater than a third threshold distance from the respective origin point and the respective destination point of the at least one minimum cost path.

The third threshold distance may be 1 radius, i.e. 12.5 km.

In block 16', map data 1001' for classifying roads is generated, wherein a routing class value, RCₓ, is assigned to one or more road segments of the digital map, wherein the assignment of the RC value is based at least in part on a determination whether one or more arcs representing the one or more road segments are included in the set of other arcs 901' that were determined in block 15'.

Similarly, a third iteration (i=1) of the method can be performed wherein:
the base digital map is partitioned into yet another/third set of tiles each having yet another/third size (e.g. corresponding to map tiles of a level 9 NDS map) and
the radius (used to determine the first, second and third thresholds) has yet
another/third size e.g. 4 x 12.5 km = 50 km
in order to determine:
arcs of the base digital map that have RCⱼ where j>i (i.e. RC_{>2} based on which it is possible to determine arcs having RC₂ based on knowledge, from the first and
second iterations, of which of the RC_{>2} arcs are also RC₄ and RC₃ arcs and hence the remaining arcs are RC₂ arcs), and
arcs of the base digital map that have RC_{≤i} (i.e. RC_{<2}).

A fourth iteration (i=0) of the method can also be performed wherein:
the base digital map is partitioned into yet another/fourth set of tiles each having yet another/fourth size (e.g. corresponding to map tiles of a level 7 NDS map) and
the radius (used to determine the first, second and third thresholds) has yet another size, e.g. 4 x 50 km = 200 km
in order to determine:
arcs of the base digital map that have RCⱼ where j>i (i.e. RC_{>1} based on which it is possible to determine arcs having RC₁ based on knowledge, from the first, second and third iterations, of which of the RC_{>1} arcs are also RC₄, RC₃ and RC₂ arcs and
hence the remaining arcs are RC₁ arcs), and
arcs of the base digital map that have RC_{≤i} (i.e. RC_{≤1} based which it is possible to determine arcs having RC₀ based on knowledge RC_{<1} arcs are also RC₁ arcs.

In later iterations (i = 2, 1, 0) the length of the minimum cost paths/routes become longer and longer, and thus the computation time for the one-to-many searches for the minimum cost paths/routes would increase accordingly. This can be avoided by using the routing classes that have already been finally determined from previous iterations. For example, in iteration i = 2, the route search algorithm could filter out unimportant arcs with RC₄ and a distance to origin and destination points that is larger than the radius corresponding to RC₃.

Practical experience of performing the various iterations shows that in fact the first iteration takes the longest runtime.

Following the determination of routing classes for segments of roads, postprocessing may be carried out.

Since all the above-described computations work on a graph model of a road network, switches between routing classes may happen on arbitrary points of a road depending on how the road is segmented into multiple arcs or how intersections are modelled. For instance, one segment of a road may have a routing classes value different to an adjoining segment of the road.

However, it is preferable to have a single routing class value for a road, or at least parts that only intersect with less important roads (or even just pedestrian paths).

In the postprocessing, the most important routing class value found along such stretches is extended. In this regard, a lowest routing class value found on a segment of a road can be applied to all segments of the road.

For example, where a stretch of road extends between a first road intersection and a second road intersection and differing parts of the stretch of road have differing RC values, an RC value assigned to one part of the stretch of road may be assigned to the entire stretch of road (i.e. such that the entire stretch has the same/uniform RC value).

Moreover, at complex intersections (which may be modelled with multiple nodes and arcs, in particular motorway intersections), connecting arcs can be assigned an RC importance (i.e. an RC value) that corresponds to one of the connected roads. For example, if an arc in a motorway intersection connects a motorway with RCₓ and a motorway with RC_{y}, the connector could have RC_{z} with z ≤ max(x, y) - in this regard the connecting arc is assigned the same RC value of the "less important" of the two roads that are connected. Similar considerations and postprocessing may be useful for slip roads in complex intersections.

Where a road intersection connects a first road having a first RC value and a second road having a second different RC value, the road intersection may be assigned an RC value that matches the highest of the two RC values, (i.e. such that the road intersection has the same RC value as the least important road, of the two roads, for routing). For instance, a road intersection, which connects an RC₁ road with an RC₂ road, may be assigned an RC value of RC₂ (i.e. such that the road intersection has the same RC value as the least important road, of the two roads, for routing).

By way of a further example, where a slip road connects a first road having a first RC value and a second road having a second different RC value, the slip road may be assigned an RC value that matches the highest of the two RC values, (i.e. such that the road intersection has the same RC value as the least important road, of the two roads, for routing).

The blocks illustrated in Figure 1 and the various steps and functionality described above represent actions in a method, functionality performed by an apparatus, and/or sections of instructions/code in the computer program.

It will be understood that each block and combinations of blocks illustrated in Figure 1, as well as the further functions described above, can be implemented by various means, such as hardware, firmware, and/or software including one or more computer program instructions. For example, one or more of the functions described below can be performed by a duly configured apparatus (such as a server or navigation device). One or more of the functions described below can be embodied by a duly configured computer program (such as a computer program comprising computer program instructions which embody the functions described below and which can be stored by a memory storage device and performed by a processor).

As will be appreciated, any such computer program instructions can be loaded onto a computer or other programmable apparatus (i.e. hardware) to produce a machine, such that the instructions when performed on the programmable apparatus create means for implementing the functions specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions for implementing the functions specified in the blocks.

Various, but not necessarily all, examples of the present disclosure can take the form of a method, an apparatus, or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

Fig. 11 schematically illustrates a block diagram of an apparatus 1 for performing the methods, processes, and procedures described in the present disclosure (not least such as those illustrated in Fig. 1). In this regard the apparatus may be, not least for example, a server or a navigation device. The component blocks of Fig. 11 are functional and the functions described can be performed by a single physical entity.

The apparatus comprises a controller 7, which could be provided within a device such as a server or a navigation device.

The controller 6 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 6 can be as controller circuitry. The controller 6 can be implemented in hardware alone, have certain aspects in software including firmware alone or can be a combination of hardware and software (including firmware).

The controller 6 can be implemented using instructions that enable hardware functionality, for example, by using executable instructions of a computer program 4 in a general-purpose or special-purpose processor 2 that can be stored on a computer readable storage medium 3, for example memory, or disk etc, to be executed by such a processor 2.

The processor 2 is configured to read from and write to the memory 3. The processor 2 can also comprise an output interface via which data and/or commands are output by the processor 2 and an input interface via which data and/or commands are input to the processor 2. The apparatus can be coupled to or comprise one or more other components 5 (not least for example one or more of: a data communication interface, input/output user interface elements and/or other modules/devices/components for inputting and outputting data/commands).

The memory 3 stores instructions such as a computer program 4 comprising such instructions (e.g. computer program instructions/code) that controls the operation of the apparatus 1 when loaded into the processor 2. The instructions of the computer program 4, provide the logic and routines that enables the apparatus to perform the methods, processes and procedures described in the present disclosure (not least such as those illustrated in Fig. 1 and discussed above). The processor 2, by reading the memory 3, is able to load and execute the computer program 4.

The instructions may be comprised in a computer program, a non-transitory computer readable medium, a computer program product, a machine readable medium. The term "non-transitory," as used herein, is a limitation of the medium itself (i.e. tangible, not a signal) as opposed to a limitation on data storage persistency (e.g. RAM vs. ROM). In some but not necessarily all examples, the computer program instructions may be distributed over more than one computer program.

Although the memory 3 is illustrated as a single component/circuitry it can be implemented as one or more separate components/circuitry some or all of which can be integrated/removable and/or can provide permanent/semi-permanent/ dynamic/cached storage.

Although the processor 2 is illustrated as a single component/circuitry it can be implemented as one or more separate components/circuitry some or all of which can be integrated/removable. The processor 2 can be a single core or multi-core processor.

The apparatus can include one or more components for effecting the methods, processes and procedures described in the present disclosure (not least such as those illustrated in Fig. 1 as well as those discussed above). It is contemplated that the functions of these components can be combined in one or more components or performed by other components of equivalent functionality. The description of a function should additionally be considered to also disclose any means suitable for performing that function.

Where a structural feature has been described, it can be replaced by means for performing one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

The apparatus can, for example, be a server device, a client device, a mobile cellular telephone, an in-vehicle integrated device, a wireless communications device, a hand-portable electronic device etc. The apparatus can be embodied by a computing device, not least such as those mentioned above. However, in some examples, the apparatus can be embodied as a chip, chip set, circuitry or module, i.e. for use in any of the foregoing.

In some examples, the apparatus comprises:
at least one processor 12; and
at least one memory 13 storing instructions that, when executed by the at least one processor 12, cause the apparatus to perform a method of generating map data, accessible at a navigation device, for classifying roads in a geographical region of a digital map, wherein the digital map comprises map data that represents segments of roads, wherein each road segment is defined at least in part by an arc between two nodes, the method comprising:
   determining one or more points for each of a plurality of areas of the digital map, wherein each of the plurality of areas comprises a plurality of nodes and arcs, and wherein the determination comprises selecting one or more of the plurality of nodes and/or one or more arc positions of the respective area as the one or more points;
   determining one or more origin points, wherein the determination comprises selecting the one or more points as the one or more origin points;
   determining, for each of the one or more origin points, a set of destination points, wherein the determination comprises:
      determining a set of points, wherein each point of the set is between first and second threshold distances from the respective origin point, and
      defining the determined set of points as the set of destination points for the respective origin point;
   calculating, for each of the one or more origin points, a set of minimum cost paths between the respective origin point and each destination point of the set of destination points for the respective origin point;
   determining a set of arcs, wherein each arc of the set of arcs:
      forms a part of at least one minimum cost path of one of the sets of minimum cost paths,
      is at a distance greater than a third threshold distance from the respective origin point and the respective destination point of the at least one minimum cost path; and
   generating map data for classifying roads, wherein the generation comprises assigning a road classification parameter value to one or more road segments, wherein the assignment of the road classification parameter value is based at least in part on a determination whether one or more arcs representing the one or more road segments are included in the set of arcs.

Fig. 12 illustrates a computer program 4 which may be conveyed via a delivery mechanism 7. The delivery mechanism 7 can be any suitable delivery mechanism, for example, a machine readable medium, a computer-readable medium, a non-transitory computer-readable storage medium, a computer program product, a memory device, a solid-state memory, a record medium such as a Compact Disc Read-Only Memory (CD-ROM) or a Digital Versatile Disc (DVD) or an article of manufacture that comprises or tangibly embodies the computer program 4. The delivery mechanism can be a signal configured to reliably transfer the computer program. An apparatus can receive, propagate or transmit the computer program as a computer data signal.

In certain examples of the present disclosure, there is provided a computer program comprising instructions, which when executed by an apparatus, cause the apparatus to perform at least the following or for causing performing a method of generating map data, accessible at a navigation device, for classifying roads in a geographical region of a digital map, wherein the digital map comprises map data that represents segments of roads, wherein each road segment is defined at least in part by an arc between two nodes, the method comprising:
determining one or more points for each of a plurality of areas of the digital map, wherein each of the plurality of areas comprises a plurality of nodes and arcs, and wherein the determination comprises selecting one or more of the plurality of nodes and/or one or more arc positions of the respective area as the one or more points;
determining one or more origin points, wherein the determination comprises selecting the one or more points as the one or more origin points;
determining, for each of the one or more origin points, a set of destination points, wherein the determination comprises:
   determining a set of points, wherein each point of the set is between first and second threshold distances from the respective origin point, and
   defining the determined set of points as the set of destination points for the respective origin point;
calculating, for each of the one or more origin points, a set of minimum cost paths between the respective origin point and each destination point of the set of destination points for the respective origin point;
determining a set of arcs, wherein each arc of the set of arcs:
   forms a part of at least one minimum cost path of one of the sets of minimum cost paths,
   is at a distance greater than a third threshold distance from the respective origin point and the respective destination point of the at least one minimum cost path; and
generating map data for classifying roads, wherein the generation comprises assigning a road classification parameter value to one or more road segments, wherein the assignment of the road classification parameter value is based at least in part on a determination whether one or more arcs representing the one or more road segments are included in the set of arcs.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, inferring and the like.

As used herein, a description of an action should also be considered to disclose enabling, and/or causing, and/or controlling that action. For example, a description of transmitting information should also be considered to disclose enabling, and/or causing, and/or controlling transmitting information. Similarly, for example, a description of an apparatus transmitting information should also be considered to disclose at least one means or controller of the apparatus enabling, and/or causing, and/or controlling the apparatus to transmit the information."

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

References to a parameter (for example: a routing class), or value of a parameter, should be understood to refer to "data indicative of", "data defining" or "data representative of" the relevant parameter/parameter value if not explicitly stated (unless the context demands otherwise). The data may be in any way indicative of the relevant parameter/parameter value, and may be directly or indirectly indicative thereof.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasise an inclusive meaning but the absence of these terms should not be taken to infer any exclusive meaning. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described. In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. A computer-implemented method of generating map data, accessible at a navigation device, for classifying roads in a geographical region of a digital map, wherein the digital map comprises map data that represents segments of roads, wherein each road segment is defined at least in part by an arc between two nodes, the method comprising:
determining one or more points for each of a plurality of areas of the digital map, wherein each of the plurality of areas comprises a plurality of nodes and a plurality of arcs, and wherein the determination comprises selecting one or more of the plurality of nodes and/or one or more positions on one or more arcs of the plurality of arcs of each of the plurality of areas of the digital map as the one or more points;
determining one or more origin points, wherein the determination comprises selecting the one or more points as the one or more origin points;
determining, for each origin point, a set of destination points, wherein the determination comprises:
determining a set of the one or more points, wherein each point of the set is between first and second threshold distances from the respective origin point, and
defining the determined set of points as the set of destination points for the respective origin point;
calculating, for each origin point, a set of minimum cost paths between the respective origin point and each destination point of the set of destination points for the respective origin point;
determining a set of arcs, wherein each arc of the set of arcs:
forms a part of at least one minimum cost path of one of the sets of minimum cost paths, and
is at a distance greater than a third threshold distance from the respective origin point and the respective destination point of the at least one minimum cost path, and/or is at a distance greater than a fourth threshold distance from the respective destination point and the respective origin point of the at least one minimum cost path; and
generating map data for classifying roads, wherein the generation comprises assigning a road classification parameter value to one or more road segments, wherein the assignment of the road classification parameter value is based at least in part on a determination whether one or more arcs representing the one or more road segments are included in the set of arcs.

2. The method of claim 1, wherein determining the one or more points for each of the plurality of areas comprises determining one or more connected components of nodes and arcs within the respective area.

3. The method of claim 1, wherein the selection of the one or more of the plurality of nodes and/or one or more positions on one or more arcs of the plurality of arcs as the one or more points of each of the plurality of areas comprises selecting one or more nodes and/or one or more positions on one or more arcs of at least one of the one or more connected components of the respective area as the one or more points.

4. The method of claim 3, wherein determining the one or more points for each area is based at least in part on at least one of the following:
a number of connected components within the respective area;
a number of nodes and arcs within a connected component of the respective area;
an attribute of the nodes and/or arcs within a connected component of the respective area; and
a predetermined threshold number of points per area.

5. The method of any previous claim, wherein determining the one or more points for each area comprises selecting one or more nodes and/or one or more positions on one or more arcs of the plurality of arcs of the respective area that are substantially evenly distributed through the respective area.

6. The method of any previous claim, wherein the plurality of areas of the digital map comprises at least one the following:
a plurality of areas into which the geographical region of the digital map is partitioned;
a plurality of substantially uniform areas;
a plurality of areas of substantially the same size; and
a plurality of tiles.

7. The method of any previous claim, wherein each of the plurality of areas has a first size, and the method further comprises performing, for each of one or more sizes of other areas whose size is different to the first size, the following:
determining one or more other points for each of a plurality of other areas of the digital map, wherein each of the plurality of other areas has a size different to the first size and comprises another plurality of nodes and another plurality of arcs, and wherein the determination comprises selecting one or more of the another plurality of nodes and/or one or more positions on one or more arcs of the another plurality of arcs of each of the plurality of areas of the digital map as the one or more other points;
determining one or more other origin points, wherein the determination comprises selecting the one or more other points as the one or more other origin points;
determining, for each of the one or more other origin points, a set of other destination points, wherein the determination comprises:
determining a set of the one or more other points, wherein each other point of the set is between two predetermined distances from the respective other origin point, and
defining the determined set of other points as the set of other destination points for the respective other origin point;
calculating, for each of the one or more other origin points, a set of other minimum cost paths between the respective other origin point and each other destination point of the respective set of other destination points;
determining another set of arcs or nodes, wherein each arc or node of the another set of arcs or nodes:
forms a part of at least one other minimum cost path of the sets of other minimum cost paths, and
is greater than a predetermined distance from the respective other origin point and the respective other destination point of the at least one other minimum cost path, and/or is at a distance greater than a fourth threshold distance from the respective destination point and the respective origin point of the at least one minimum cost path; and
generating map data for classifying roads, wherein the generation comprises assigning a road classification parameter value to one or more road segments based at least in part on a determination whether one or more arcs representing the road segments are included in the other set of arcs.

8. The method of claim 7, wherein the calculating, for each of the one or more other origin points, a set of other minimum cost paths comprises: filtering out one or more road segments or arcs, wherein the filtering is based at least in part on a road classification parameter value assigned to the road segments or arcs.

9. The method of any previous claim, wherein the road classification parameter is at least one of the following:
indicative of an importance metric of a road for calculating route;
an attribute for a road for use with a route calculation algorithm;
an attribute for a road for use in determining whether the road should be used in at least part of a route calculation; and a road class.

10. The method of any previous claim, further comprising:
determining a stretch of road that extends between a first road intersection and a second road intersection;
determining a road classification parameter value assigned to at least a part of the stretch of road; and
assigning the determined road classification parameter to the entire stretch of road.

11. The method of any previous claim, further comprising:
determining a road intersection between:
a first stretch of road having a first road classification parameter, and
a second stretch of road having a second road classification parameter; and assigning the road intersection a classification parameter, wherein the assigned classification parameter is based at least in part on the first and second road classification parameters.

12. The method of any previous claim, further comprising at least one of:
providing the map data for classifying roads to a navigation system; and
using the map data for classifying roads by a navigation system for route calculations.

13. An apparatus comprising means for performing the method of any of the previous claims.

14. A computer program comprising instructions which, when the program is executed by a computer, cause the computer to carry out the method of any of claims 1 to 12.
